# EUROPEAN PATENT SPECIFICATION

(11) **EP 3 196 285 B1**
(45) Date of publication and mention of the grant of the patent: **02.10.2019**
(21) Application number: 15842951.4
(22) Date of filing: 31.08.2015
(51) Int. Cl.: C12C 7/00, C12C 13/00, C12C 7/06, C12C 7/04

(54) **METHOD FOR PRODUCING SACCHARIFIED MOROMI**
VERFAHREN ZUR HERSTELLUNG VON SACHARIFIZIERTEM MOROMI
PROCÉDÉ DE PRODUCTION DE MOROMI SACCHARIFIÉ

(30) Priority: 18.09.2014 JP 2014189506
(43) Date of publication of application: 26.07.2017
(73) Proprietor: Suntory Holdings Limited, Osaka-shi, Osaka 530-8203 (JP)
(72) Inventor: HIDA, Yoshinori, Tokyo 135-8631 (JP); MARUHASHI, Taichi, Gunma 370-0503 (JP); ISHIZUKA, Yusuke, Osaka 618-0001 (JP)
(74) Representative: Vossius & Partner Patentanwälte Rechtsanwälte mbB
(86) International application number: PCT/JP2015/074749
(87) International publication number: WO 2016/043038

(56) References cited:
- GB-A- 2 391 553
- GB-B- 2 175 006
- JP-A- H1 075 763
- JP-A- H1 075 763
- JP-A- 2010 207 215
- JP-A- 2010 207 215
- JP-A- 2014 117 258
- JP-A- 2014 128 251
- JP-A- 2014 128 251
- JP-A- 2014 155 483
- JP-A- 2014 166 168
- US-A- 4 661 449

## Description

### TECHNICAL FIELD

The present invention relates to a method for producing a saccharified mash (*moromi*)*.* More specifically, the present invention relates to a method for producing a saccharified mash usable in the production of a beer-taste beverage such as beer, and an apparatus usable for the production method.

### BACKGROUND ART

With the diversification of tastes of the consumers in the recent years, the development of beer-taste beverages having various flavor features is in demand.

For example, Japanese Patent Gazette No. 3,836,117 discloses that use of a product prepared by subjecting a sugar and a proteolytic product to a Maillard reaction at a temperature of 105°C or higher and 121°C or lower and a preparation product thereof makes it possible to control a liquid color and taste of a fermented alcoholic beverage, so that a fermented alcoholic beverage with a natural beer-like coloration or taste can be produced without using a colorant such as caramel as conventionally used.

WO 2009/078360 has reported that a beer-taste beverage with enhanced richness in taste and enhanced aroma can be produced by subjecting malts which are raw materials for beers or *Happoushu* (low-malt beers)amylaceous raw materials such as barleys, rice, maize (corns), *Sorghum bicolor (Kaoliang),* potatoes, starches, and sugars to saccharification, and thereafter reacting the sugar and/or proteolytic product at a reaction temperature of 122°C or higher and 141°C or lower, thereby allowing to contain maltol and furaneol which are high-temperature reaction products in larger amounts than conventional products.

WO 2009/078359 has reported that a specified molecular weight fraction of a high molecular weight component (aminocarbonyl reaction forming component and caramel reaction forming component) produced by treating barley seeds, barley malts, barley seed extracts, barley malt extracts, or a mixture thereof at a temperature of from 120° to 150°C has mild tastiness (*umami*) or richness in taste; therefore, tastiness or richness in taste of the beer-taste beverage can be enhanced by adding those fractions as a flavor improver to foodstuff such as a beer-taste beverage, whereby the flavor of the beer-taste beverage can be greatly improved.

Other related technology is shown in GB 2 391 553 A.

### SUMMARY OF THE INVENTION

### PROBLEMS TO BE SOLVED BY THE INVENTION

However, in the method of Japanese Patent Gazette No. 3,836,117, although a flavor component is formed by a Maillard reaction, the extraction of the flavor component is not necessarily sufficient, so that a further effort is needed in order to accomplish a desired flavor. On the other hand, when treated at high temperatures as in WO 2009/078360 and WO 2009/078359, while it is possible to extract a component that enhances richness in taste and aroma, a "burn"-like component or the like is more likely to be formed, so that it is difficult to control a desired taste, and it is necessary to heat a mash kettle to an even higher temperature in order to control the reaction liquid temperature at a high temperature mentioned above, which is not said to be highly efficient from the aspect of facilities.

In addition, as a mash kettle used in the preparation of saccharified mash, a copper kettle has been previously used, but its upkeep or control is complicated, so that the mainstream today is use of a stainless steel (SUS) kettle.

An object of the present invention is to remark on a heating apparatus of a saccharified mash as one of the method for preparing a flavor component, to elucidate the influences thereof on the quality of a beer-taste beverage, and to provide a method for producing a saccharified mash which is useful in efficiently producing a beer-taste beverage having excellent flavor.

### MEANS TO SOLVE THE PROBLEMS

As a result of intensive studies, the present inventors have found that a saccharified mash can be produced which is useful in precisely producing a desired beer quality by heating a mash to be saccharified in a tube made of copper upon the production of a saccharified mash, and the present invention has been perfected thereby.

Specifically, the present invention relates to the following [1] to [2]:
[1] A method for producing a saccharified mash including drawing out a part of a mash to be saccharified into a tank, heating the part, and returning the part and mixing with the remainder part, characterized in that the method includes heating the drawn-out mash to be saccharified in a copper tube.
[2] An apparatus for producing a saccharified mash characterized in that the apparatus comprises a mash tun for housing a mash to be saccharified in a manner capable of holding temperature, and a tank capable of receiving a part of the mash to be saccharified from the mash tun and returning a heat-treated mash to the mash tun, wherein the tank includes an external circulation pipe including a copper tube, wherein heating of the mash is enabled within the copper tube.

### EFFECTS OF THE INVENTION

The saccharified mash obtainable by the method of the present invention allows to control the generation of factors that would be regarded as negative in sensory aspect such as "burnt taste," and enhances "body," "aroma" and the like, thereby making it possible to precisely produce a desired beer-taste beverage.

### BRIEF DESCRIPTION OF THE DRAWINGS

FIG. 1 is graphs showing the results of sensory assessments of beer-taste beverages using saccharified mash with different heating methods.
FIG. 2 is a schematic view showing one embodiment of a production apparatus usable in the production method of the present invention.

### MODES FOR CARRYING OUT THE INVENTION

The method for producing a saccharified mash of the present invention is a method including drawing out a part of a mash to be saccharified into a tank, heating the part, and returning the part and mixing with the remainder part, characterized in that the method includes heating the drawn-out mash to be saccharified in a copper tube.

Copper is a metal that has a function as an oxidizing agent. Accordingly, when a mash to be saccharified is heated in a vessel made of copper, although the detailed mechanisms thereof are not elucidated, an oxidation reaction proceeds at the contact surface with copper, and it is assumed to more likely cause formation of a component relating to "body," "aroma" or the like.

### (Mash to Be Saccharified)

In the present invention, the "mash to be saccharified" refers to a mixture in which warm water is added to raw materials containing malts, and a reaction from starch to sugar is carried out by heating. For example, the mash to be saccharified is obtained by supplying malts which are pulverized by a method well known to one of ordinary skill in the art into a mash tun, and mixing the pulverized malts with a warm water at a temperature of from about 40° to about 70°C. Here, a mash tun known to one of ordinary skill in the art can be used without particular limitations.

As the raw materials of the mash to be saccharified, besides malts, amylaceous raw materials such as barleys, rice, maize (corns), *Sorghum bicolor (Kaoliang),* potatoes, starches, and sugars can be used. In addition, the raw materials may contain proteolytic products contained in crop raw materials such as malts, barleys, and rice, or an additive such as a bittering agent or a color pigment.

### (Tank)

The tank into which a part of the drawn out mash to be saccharified is supplied (mash kettle) may be any ones so long as the tank is capable of receiving a heat-treated mash and returning the part to a mash tun, and the materials therefor are not particularly limited. For example, as mentioned above, although a tank made of copper has been conventionally used, a tank made of stainless steel is suitably used at present in consideration of complicatedness of upkeep and control.

The amount of the mash to be saccharified drawn into the tank is not particularly set, and the amount can be properly adjusted in accordance with a known technique. For example, a mash to be saccharified that is filled in the mash tun can be drawn into the tank in an amount of from 10 to 50% by mass. Also, the number of times of drawing out and returning the mash to be saccharified are not particularly limited.

### (Heat Treatment)

In the present invention, the heat treatment of the mash to be saccharified that is drawn out is carried out in a copper tube. So long as the heat treatment of the mash to be saccharified is carried out in a copper tube, a part of the mash to be saccharified may be drawn out into a copper tube and heated, or heating may be carried out while circulating the entirety in a copper tube. The amount drawn out or circulated in a copper tube is not particularly set, and the amount can be properly adjusted. The copper tube is not particularly set in its shape so long as the entire copper tube can be heated and subjected to heat exchange. From the viewpoint of forming a component concerning "body," "aroma" or the like, a ratio of an inner surface area of the copper tube (m²) to a volume of a mash to be saccharified which is drawn into a tank (m³) (inner surface area / volume) is preferably 1.5 or more, and more preferably 3.0 or more, and preferably 10.0 or less, more preferably 9.0 or less, even more preferably 7.0 or less, and still even more preferably 5.0 or less. In addition, the length and the thickness of the copper tube can be properly adjusted depending upon the production facilities and the amount produced. Here, the purity or quality of the copper is not particularly limited.

The heat treatment may be subjected to direct fire so long as the above copper tube can be heated, and it is preferable that heating is carried out using steam in consideration of upkeep or maintenance of the copper tube. As the steam used in heating, a steam at an absolute pressure of from 0.12 to 0.20 MPa is preferably used. A steam produced by a boiler (not illustrated in figure) is subjected to a pressure reduction via a reduced pressure valve and used in heating of the above copper tube. The absolute pressure as used herein is a value of a gauge pressure within a steam pipe from a reduced pressure valve to a copper tube added with an atmospheric pressure. The temperature of the steam that heats a copper tube is preferably 105°C or higher, and more preferably 110°C or higher. Also, the temperature is preferably 120°C or lower, and more preferably 115°C or lower. The heating time is not unconditionally determined because it depends upon the amount of the mash drawn out for heating, and the mash in the copper tube may reside in the tube and heated, or the mash may be heated while circulating. In addition, it is desired that the above copper tube is kept heating until the heating of an entire amount of the mash to be saccharified is terminated, and the number of times of the above heat treatment performed is not particularly limited. Since the mash to be saccharified that is drawn out is mixed with the remainder of the mash in the mash tun to allow saccharification, so that the temperature reached by the above heat treatment may be higher than that of the remainder of the mash, and for example, it can be heated up to 100°C by the above heat treatment.

The above copper tube can appropriately include a pipe for drawing out a mash into a tank, a pipe for returning the heated mash, a valve for adjusting the amount of the mash, or the like between the tube and the tank, so long as the heat treatment for a mash to be saccharified may be carried out. Here, while the materials or shapes or the length of the above pipe can be appropriately set in accordance with known techniques, it is preferable to have a design that allows easiness in attachability and detachability of the copper tube from the pipes, from the viewpoint of easiness in the upkeep or maintenance of the copper tube.

Thus, the heat treatment of the mash can be carried out in a copper tube. The heat-treated mash obtained is mixed with the remainder of mash to allow saccharification, whereby a saccharified mash in the present invention can be produced. Generally known conditions for saccharification may be used.

A beer-taste beverage can be produced by removing husks or the like from the saccharified mash obtained by filtration, adding hops or the like thereto, boiling the mixture, removing solid contents such as coagulated proteins, adding an yeast to allow fermentation, and optionally removing the yeast with a filter or the like. Accordingly, the present disclosure also provides a beer-taste beverage, not part of the invention, obtainable by using a saccharified mash obtained by the production method of the present invention as a part of raw materials. Here, storage (stored liquor), filtration and container filling, and optionally sterilization steps can be carried out, and as the conditions for these boiling step, solid content removing step, fermentation step, and the like, conditions that are generally known may be used.

The beer-taste beverage can be variously classified according to the other raw materials, production methods, and the Japanese Liquor Tax Act, so long as a saccharified mash that is heated in a copper tube is used, and may be any beverages so long as the beverage has a beer-like taste. In other words, the beer-taste beverage obtained by the method of the present invention includes all the beer-taste beverages irrespective of the presence or absence of a fermentation step with an yeast, unless specified otherwise. For example, the beer-taste beverage includes *Happoushu* (low-malt beers), beers, liqueurs, and other miscellaneous liquors in the names under the Japanese Liquor Tax Act, and also includes fermented beverages having low alcoholic contents (for example, fermented beverages having alcoholic contents of less than 1%), Spirits, non-alcoholic beer-taste beverages, beer-taste refreshing beverages, and the like. The beer-taste beverage of the present invention has excellent flavor in which "burnt taste" is controlled, and "body" and "aroma" are provided.

The alcoholic concentration of the beer-taste beverage obtained by the method of the present invention is, but not particularly limited to, preferably from 0 to 40% (v/v), and more preferably from 1 to 15% (v/v). Especially, an alcoholic concentration of the same level as beverages favorably drinkable by consumers as the beer-taste beverage such as beers and *Happoushu* (low-malt beers), in other words, from 3 to 8% (v/v), is more preferred.

The beer-taste beverage is filled in a tightly sealed container such as bottles, cans, barrels, or plastic bottles (PET bottles), so that the beverage can be provided as a beverage in a container.

Furthermore, the present invention provides an apparatus for producing a saccharified mash.

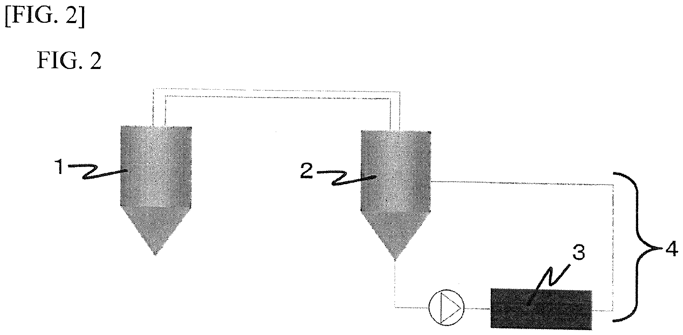

The apparatus for producing a saccharified mash of the present invention is characterized in that the apparatus comprises a mash tun (numeral 1 of FIG. 2) for housing a mash to be saccharified in a manner capable of holding temperature, and a tank (numeral 2 of FIG. 2) capable of receiving a part of the mash to be saccharified from the mash tun and returning a heat-treated mash to the mash tun, wherein the tank includes an external circulation pipe (numeral 4 of FIG. 2) including a copper tube (numeral 3 of FIG. 2), wherein heating of the mash is enabled within the copper tube.

The mash tun can be appropriately set in accordance with known techniques, as mentioned above.

In addition, the tank comprises a tank main body and a circulation pipe having a copper tube externally attached to the tank main body, and it is preferable that the tank main body has a pipe capable of receiving a part of a mash to be saccharified from the mash tun and returning a heat-treated mash to the mash tun. The copper tube is similar to a copper tube usable in the method for producing a saccharified mash of the present invention, and the distribution of a mash to be heated and a heat-treated mash inside the copper tube is carried out by the circulation pipe.

### EXAMPLES

The present invention will be specifically described hereinbelow by the Examples, without intending to limit the scope of the present invention to the following Examples.

### Example 1 and Comparative Examples 1 and 2

Thirty kilograms of malts were ground to an appropriate granularity, the ground malts were supplied into a 200 L-volume mash tun, and 120 L of warm water was added thereto to prepare a mash (mash to be saccharified) at about 40°C. A 30 L part was drawn out from the mash tun, heated to 100°C to boil, and mixed with the remainder to allow saccharification. A mash in which saccharification was perfected was heated to 78°C, transferred to a wort filtration tank and filtered, to obtain a filtrate. Here, in Example 1 and Comparative Examples 1 and 2, heating facilities used in the step of boiling a part of the mash defined above at 100°C were different. In Comparative Example 1, a facility in which an entire amount was subjected to heating with a steam in a stainless steel kettle (bottom area: 0.20 m², 50 L volume) was used; in Comparative Example 2, a facility in which an entire amount was heated on direct fire in a copper kettle (bottom area: 0.20 m², 50 L volume) was used; in Example 1, a facility in which an entire amount was supplied in the stainless steel kettle, the entire amount was then heated with a copper steam heat exchanger (copper tube: diameter: 23 mm, length: 1.8 m, inner surface area: 0.13 m², ratio of inner surface area / volume of mash supplied into the stainless steel kettle = 4.3), using a steam at an absolute pressure of 0.15 MPa, while circulating at 10 L/min (equivalent to an amount of mash existing in the copper pipe during circulation of 7.5 x 10⁻⁴ m³), and the heated mash was returned to the stainless steel kettle.

A part of the filtrate obtained was taken, hops were added thereto, and a mixture was boiled for 60 to 90 minutes. These controlled worts were microbially utilized primarily for glucose, sucrose, maltose, and isomaltose under the identical conditions. Bottom-fermenting beer yeasts that were not microbially utilized or hardly likely to be microbially utilized for a trisaccharide were added thereto, and allowed to ferment at about 10°C for from 10 to 30 days, and a fermented mixture was filtered, to give a filtered beer.

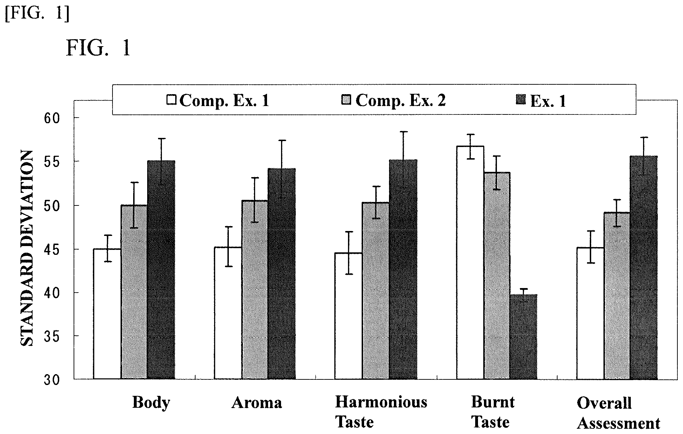

The flavor of the resulting beer was assessed according to a sensory test according to a scoring system. Seven well-trained sensory assessors were asked to assess for "body," "aroma," "harmonious taste," "burnt taste," and "overall assessment" in a full mark of score 3, wherein "very strongly felt" or "very excellent" was given score 3; "clearly felt" or "excellent" was given score 2; "slightly felt" or "slightly excellent" was given score 1; and "not felt" or "ordinary" was given score 0. Specifically, 7 sensory assessors were asked to assess the three samples (Example 1 and Comparative Examples 1 and 2), and a deviation of each of the assessment results was calculated from a mean and standard deviations of the assessment results for each of the items, and a mean thereof was defined as an assessment score for each sample. The deviation had a mean score of 50, wherein the higher the numerical values for "body," "aroma," "harmonious taste," and "overall assessment," and the lower the numerical values for "burnt taste," the more excellent the results. The results are shown in Table 1 and FIG. 1.

### [Table 1]

**Table 1**

| Mean | Body | Aroma | Harmonious Taste | Burnt Taste | Overall Assessment |
|---|---|---|---|---|---|
| Comp. Ex.1 | 45.1 | 45.3 | 44.5 | 56.6 | 45.3 |
| Comp. Ex. 2 | 50.0 | 50.6 | 50.3 | 53.7 | 49.2 |
| Ex. 1 | 54.9 | 54.1 | 55.1 | 39.7 | 55.6 |

It can be seen from Table 1 that the beer in which a saccharified mash obtained by the method for production of the present invention is used has not only the controlled taste of burnt taste, but also excellent body, aroma, taste, and the like, thereby showing excellent overall flavors.

### INDUSTRIAL APPLICABILITY

The beer in which a saccharified mash obtained by the method of the present invention is used has not only the controlled burnt taste, but also excellent body, aroma, taste, and the like, whereby a new taste can be provided as a luxurious product.

### EXPLANATION OF NUMERALS

- 1: mash tun
- 2: tank (mash kettle)
- 3: copper tube
- 4: external circulation pipe

## Claims

1. A method for producing a saccharified mash comprising drawing out a part of a mash to be saccharified into a tank, heating the part, and returning the part and mixing with the remainder part, **characterized in that** the method comprises heating the drawn-out mash to be saccharified in a copper tube.

2. The method according to claim 1, wherein the heating in the copper tube comprises heating the copper tube by a steam at an absolute pressure of from 0.12 to 0.20 MPa.

3. The method according to claim 1 or 2, wherein a ratio of an inner surface area (m²) of the copper tube to a volume (m³) of the mash to be saccharified which is drawn out into the tank (inner surface area / volume) is from 1.5 to 10.0.

4. An apparatus for producing a saccharified mash **characterized in that** the apparatus comprises a mash tun for housing a mash to be saccharified in a manner capable of holding temperature, and a tank capable of receiving a part of the mash to be saccharified from the mash tun and returning a heat-treated mash to the mash tun, wherein the tank comprises an external circulation pipe comprising a copper tube, wherein heating of the mash is enabled within the copper tube.

## Patentansprüche

1. Verfahren zum Herstellen einer verzuckerten Maische, das das Abziehen eines Teils einer zu verzuckernden Maische in einen Tank, das Erwärmen des Teils und das Zurückführen des Teils und das Mischen mit dem restlichen Teil aufweist, **dadurch gekennzeichnet, dass** das Verfahren das Erwärmen der abgezogenen zu verzuckernden Maische in einer Kupferröhre aufweist.

2. Verfahren nach Anspruch 1, wobei das Erwärmen in der Kupferröhre das Erwärmen der Kupferröhre durch Dampf mit einem absoluten Druck von 0,12 bis 0,20 MPa aufweist.

3. Verfahren nach Anspruch 1 oder 2, wobei ein Verhältnis eines Innenflächenbereichs (m²) der Kupferröhre zu einem Volumen (m³) der zu verzuckernden Maische, die in den Tank abgezogen wird (Innenflächenbereich/Volumen) von 1,5 bis 10,0 beträgt.

4. Vorrichtung zur Herstellung einer verzuckerten Maische, **dadurch gekennzeichnet, dass** die Vorrichtung eine Maischepfanne zur Aufnahme einer zu verzuckernden Maische in einer Weise, die zum Halten der Temperatur imstande ist, und einen Tank aufweist, der zum Aufnehmen eines Teils der zu verzuckernden Maische aus der Maischepfanne und zum Zurückführen einer wärmebehandelten Maische zur Maischepfanne imstande ist, wobei der Tank eine äußere Umwälzleitung aufweist, die eine Kupferröhre aufweist, wobei das Erwärmen der Maische in der Kupferröhre ermöglicht wird.

## Revendications

1. Procédé de production d'un moût saccharifié, comprenant l'extraction d'une partie d'un moût à saccharifier vers un réservoir, le chauffage de ladite partie, et le renvoi de ladite partie et son mélange avec la partie restante, **caractérisé en ce que** ledit procédé comprend le chauffage du moût à saccharifier extrait dans un tube en cuivre.

2. Procédé selon la revendication 1, où le chauffage dans le tube en cuivre comprend le chauffage du tube en cuivre à la vapeur sous une pression absolue comprise entre 0,12 et 0,20 MPa.

3. Procédé selon la revendication 1 ou la revendication 2, où le rapport entre la surface intérieure (en m²) du tube en cuivre et le volume (en m³) du moût à saccharifier extrait vers le réservoir (surface intérieure/ volume) est compris entre 1,5 et 10,0.

4. Dispositif de production d'un moût saccharifié, **caractérisé en ce que** ledit dispositif comprend une cuve-matière recevant un moût à saccharifier de manière à en maintenir la température, et un réservoir apte à recevoir une partie du moût à saccharifier de la cuve-matière et retournant un moût traité thermiquement à la cuve-matière, ledit réservoir comprenant une conduite de circulation extérieure avec un tube en cuivre, le chauffage du moût est rendu possible à l'intérieur dudit tube en cuivre.
